# EUROPEAN PATENT SPECIFICATION

(11) **EP 2 999 266 B1**
(45) Date of publication and mention of the grant of the patent: **30.05.2018**
(21) Application number: 13886497.0
(22) Date of filing: 08.06.2013
(51) Int. Cl.: H04W 36/02

(54) **METHOD, DEVICE AND SYSTEM FOR OBTAINING MOBILE NETWORK DATA RESOURCES**
VERFAHREN, VORRICHTUNG UND SYSTEM ZUM ERHALT VON MOBILNETZDATENRESSOURCEN
PROCÉDÉ, DISPOSITIF ET SYSTÈME POUR OBTENIR DES RESSOURCES DE DONNÉES DE RÉSEAU MOBILE

(43) Date of publication of application: 23.03.2016
(73) Proprietor: Huawei Technologies Co., Ltd., Longgang District Shenzhen, Guangdong 518129 (CN)
(72) Inventor: ZHANG, Lixue, Shenzhen Guangdong 518129 (CN); XIONG, Chunshan, Shenzhen Guangdong 518129 (CN)
(74) Representative: Epping - Hermann - Fischer
(86) International application number: PCT/CN2013/076991
(87) International publication number: WO 2014/194526

(56) References cited:
- EP-A1- 2 713 649
- WO-A1-2011/116819
- WO-A1-2013/010451
- CN-A- 101 938 794
- CN-A- 102 300 272
- CN-A- 102 612 143
- GB-A- 2 494 471
- US-A1- 2011 171 967

## Description

### TECHNICAL FIELD

Embodiments of the present invention relate to communication technologies and, in particular, to a method, a device and a system for obtaining mobile network data resources.

### BACKGROUND

P2P (Peer to Peer, briefed as P2P) network which is also named as a peer network, is a distributed network, which links users directly, to perform a point to point interaction, thus making communications between network nodes easier and more directly and eliminating a central server substantially. A transmission mechanism of the P2P network is that, when taking part in a P2P communication process, and obtaining resources from the network, a user obtains in advance information of users who have saved segments of the resources, and downloads the segments of the resources from the users. At the same time of downloading, the user also sends loaded content to other users who need the content. Along with the appearance of the distributed P2P network, edge resources of the network can be fully used, and the network transmission efficiency is improved, meanwhile a problem of central bottle-neck of a centralized network is also avoided.

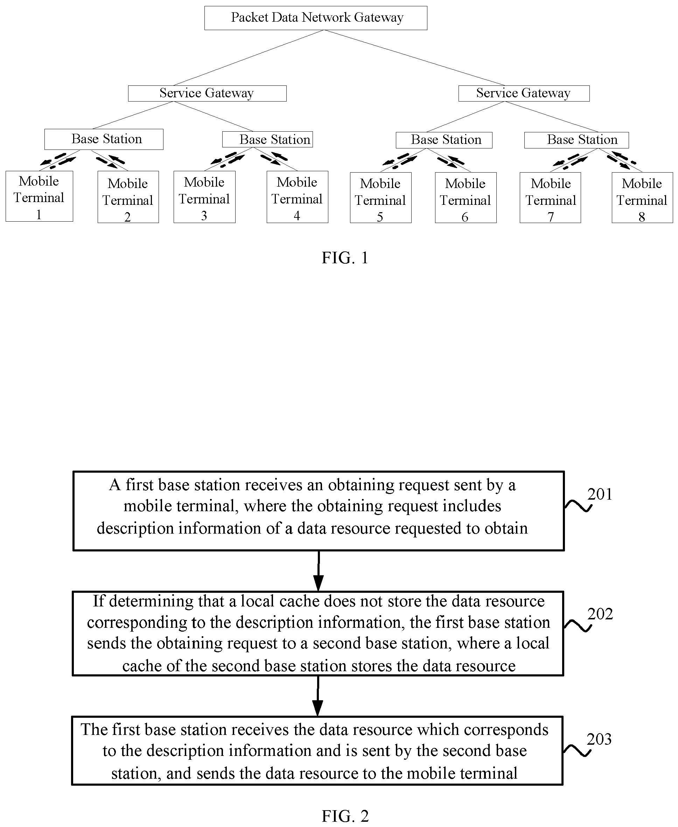

With rapid development of the mobile communication network technology, long term evolution (Long Term Evolution, briefed as LTE) network can provide high speed data services, taking LTE R8 as an example, a system under a spectrum bandwidth of 20Mhz can provide a downlink peak rate of 100Mbit/s and an uplink peak rate of 50Mbit/s, and the requirement of the users on data resources becomes more and more. To meet the large requirement of the users on data resources, the P2P transmission mechanism can be introduced into a network such as LTE network in the prior art, thus the transmission efficiency of mobile communication network can be improved, and the network resources can be fully used. FIG.1 is a schematic diagram of introducing P2P transmission mechanism into the LTE network, as shown in FIG. 1, mobile terminal 1 to mobile terminal 8 wirelessly access the LTE network, and when P2P technology is applied between these mobile terminals, e.g., when the mobile terminal 1 obtains data from mobile terminal 2, mobile terminal 3, mobile terminal 6 and etc, these mobile terminals need to upload the data to base stations where these mobile terminals are located and then the base stations transmit the data to the mobile terminal 1, thus a lot of network uplink bandwidth will be occupied, and it would be a huge waste for the limited wireless resources.

WO 2013/010451 A1 describes a synchronization method for distributed caching of data heat value, which includes a first base station receiving a request that user equipment accesses a packet domain service; in response to the request for the packet domain service, if the first base station judges that the packet domain service is cached locally, then sending the packet domain service to the user equipment.

WO 2011/116819 A1 describes a method for optimising the distribution of data objects between caches in a cache domain of a resource limited network, in which user requests for data objects are received at caches in the cache domain; a notification is sent from each cache at which a request is received to a cache manager; at the cache manager, object information is collated and stored, and objects for distribution within the cache domain are identified on the basis of the object information; instructions are sent from the cache manager to the caches to distribute data objects stored in those caches between themselves; the data objects are distributed between the caches using transmission capacity of the network that would otherwise be unused.

GB 2494471 A describes an arrangement for caching requested content in a mobile communications network, in which the mobile communications network is configured to receive a request to access the content from a communications terminal from the applications server, to identify that the content data is stored in the local data store, and to communicate the content data to the communications terminal from the local data store as if the content data had been communicated from the applications server.

### SUMMARY

Embodiments of the present invention provide a method, device and system for obtaining mobile network data resources, to overcome the problem that a lot of network uplink bandwidth is occupied after P2P transmission mechanism is introduced into a mobile network.

In a first aspect, embodiments of the present invention provide a method for obtaining data resources, including:
receiving, by a first base station, an obtaining request sent by a mobile terminal, where the obtaining request includes description information of a data resource requested to obtain;
if the first base station determines that a local cache does not store the data resource corresponding to the description information, sending, by the first base station, the obtaining request to a second base station based on peer to peer, P2P, technology, where a local cache of the second base station stores the data resource; and
receiving, by the first base station, the data resource which corresponds to the description information and is sent by the second base station based on a P2P transmission mechanism, and sending the data resource to the mobile terminal.

Combining the first aspect, in a first possible implementation of the first aspect, where the sending the obtaining request to the second base station includes:
sending ,by the first base station, the obtaining request directly to the second base station, according to a record of obtaining the data resource from the second base station which is saved previously; or,
sending, by the first base station, the obtaining request to a server, receiving an identification information which is returned by the server and is an identification information of a base station which stores the data resource, and sending the obtaining request to the second base station according to the identification information.

Combining the first possible implementation of the first aspect, in a second possible implementation of the first aspect, the method further includes:
if the first base station does not receive the data resource sent by the second base station, sending, by the first base station, the obtaining request, which carries a forbidden access redirection instruction, again to the server; and
receiving, by the first base station, the data resource, which is obtained from the second base station by the server on behalf of the first base station, according to the forbidden access redirection instruction.

Combining the first aspect, the first or the second possible implementation of the first aspect, in a third possible implementation of the first aspect, the method further includes:
reporting, by the first base station, to the server description information of data resources stored in the local cache.

Combining the first aspect, the first or the second possible implementation of the first aspect, in a fourth possible implementation of the first aspect, the method further includes:
if the first base station determines that the local cache stores the data resource corresponding to the description information, sending, by the first base station, directly the data resource to the mobile terminal.

In a second aspect, embodiments of the present invention provide a method for obtaining data resources, including:
receiving, an obtaining request sent by a first base station based on peer to peer, P2P, technology, where the obtaining request includes description information of a data resource which is requested to obtain; and
sending the data resource stored in a local cache to the first base station based on a P2P transmission mechanism.

In a third aspect, embodiments of the present invention provide a base station, including:
a first receiving module, configured to receive an obtaining request sent by a mobile terminal, where the obtaining request includes description information of a data resource requested to obtain;
an obtaining module, configured to, if determining that a local cache does not store the data resource corresponding to the description information, send the obtaining request to a second base station based on peer to peer, P2P, technology, where a local cache of the second base station stores the data resource; and
a first sending module, configured to receive the data resource which corresponds to the description information and is sent by the second base station based on a P2P transmission mechanism, and send the data resource to the mobile terminal.

Combining the third aspect, in a first possible implementation of the third aspect, where the obtaining module includes:
a first unit, configured to send the obtaining request directly to the second base station, according to a record of obtaining the data resource from the second base station which is saved previously; and/or,
a second unit, configured to send the obtaining request to a server, receive an identification information which is returned by the server and is an identification information of a base station which stores the data resource, and send the obtaining request to the second base station according to the identification information.

Combining the first possible implementation of the third aspect, in a second possible implementation of the third aspect, where the second unit is further configured to:
if the first sending module does not receive the data resource sent by the second base station, send the obtaining request, which carries a forbidden access redirection instruction, again to the server; correspondingly,
the first sending module, is further configured to receive the data resource, which is obtained from the second base station by the server on behalf of the first base station, according to the forbidden access redirection instruction.

Combining the third aspect, the first or the second possible implementation of the third aspect, in a third possible implementation of the third aspect, where the first sending module is further configured to: report to the server description information of data resources stored in the local cache thereof.

In a fourth aspect, embodiments of the present invention provide a base station, including:
a second receiving module, configured to receive an obtaining request sent by a first base station based on peer to peer, P2P, technology, where the obtaining request includes description information of a data resource which is requested to obtain; and
a second sending module, configured to send the data resource stored in a local cache to the first base station based on a P2P transmission mechanism.

In a fifth aspect, embodiments of the present invention provide a network system, including: at least one base station according to any one of the third aspect and the first to the third possible implementations of the third aspect, and at least one base station according to the fourth aspect.

Combining the fifth aspect, in a first impossible implementation of the fifth aspect, further including:
a server, which stores description information of data resources stored in a local cache of each base station'.

In the method, device and system for obtaining data resources of a mobile network in the embodiments of the present invention, the first mobile station receives the obtaining request which includes description information of the data resource requested to obtain and is sent by a mobile terminal, and if the first mobile station determines that a local cache does not store the data resource corresponding to the description information, the first mobile station sends the obtaining request to the second base station whose local cache stores the data resource, the second base station receives the obtaining request sent by the first mobile station, and sends the data resource stored in the local cache to the first mobile station, and the first base station receives the data resource which corresponds to the description information and is sent by the second base station, and sends it to the mobile terminal, thus it is realized that data resources are obtained between base stations based on P2P technology, which is able to prevent the problem that a lot of network uplink bandwidth is occupied after P2P transmission mechanism is introduced into the mobile network.

### BRIEF DESCRIPTION OF DRAWINGS

FIG.1 is a schematic diagram of introducing P2P transmission mechanism into an LTE network;
FIG. 2 is a flow chart of a first embodiment of a method for obtaining data resources according to the present invention;
FIG. 3 is a network structural schematic diagram of the first embodiment of the method for obtaining data resources according to the present invention;
FIG. 4 is a signaling flow chart of a second embodiment of the method for obtaining data resources according to the present invention;
FIG. 5 is a network structural schematic diagram of the second embodiment of the method for obtaining data resources according to the present invention;
FIG. 6 is a flow chart of a third embodiment of the method for obtaining data resources according to the present invention;
FIG. 7 is a signaling flow chart of the third embodiment of the method for obtaining data resources according to the present invention;
FIG. 8 is a flow chart of a fourth embodiment of the method for obtaining data resources according to the present invention;
FIG. 9 is a structural schematic diagram of a first embodiment of a base station according to the present invention;
FIG. 10 is a structural schematic diagram of a second embodiment of the base station according to the present invention;
FIG. 11 is a structural schematic diagram of a fourth embodiment of the base station according to the present invention;
FIG. 12 is a structural schematic diagram of a first embodiment of a network system according to the present invention;
FIG. 13 is a structural schematic diagram of a second embodiment of the network system according to the present invention; and
FIG. 14 is a structural schematic diagram of a first embodiment of a base station device according to the present invention.

### DESCRIPTION OF EMBODIMENTS

To make the objectives, technical solutions, and advantages of embodiments of the present invention clearer, the following clearly and comprehensively describes the technical solutions in embodiments of the present invention with reference to the accompanying drawings in embodiments of the present invention. Apparently, the described embodiments are merely a part of embodiments of the present invention rather than all embodiments. All other embodiments obtained by persons of ordinary skill in the art based on the embodiments of the present invention without creative effort shall fall within the protection scope of the present invention.

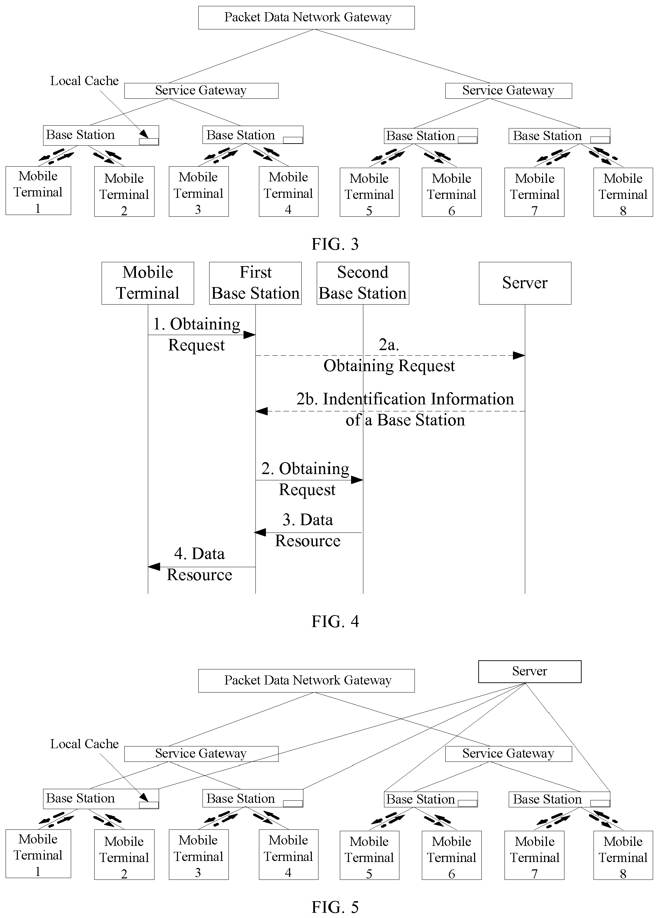

FIG. 2 is a flow chart of a first embodiment of a method for obtaining data resources according to the present invention, and FIG. 3 is a network structural schematic diagram of the first embodiment of the method for obtaining data resources according to the present invention. An execution entity of the present embodiment is a base station, which can be implemented through software and/or hardware. As shown in FIG. 2, the method of the present embodiment can include:
Step 201, a first base station receives an obtaining request sent by a mobile terminal, where the obtaining request includes description information of a data resource requested to obtain.

In a cellular mobile communication network, a cellular wireless networking mode is used, where a terminal and a network device (a base station) is linked through a wireless channel, then mutual communication between the terminal and the network is realized.

Specifically, the mobile terminal initiates the obtaining request for a certain data resource, such as requesting a video or an application software and etc. The obtaining request includes the description information of the data resource requested to obtain, such as a name identifier, a position identifier and etc. The first base station where the mobile terminal is located receives the obtaining request.

Step 202, If determining that a local cache does not store the data resource corresponding to the description information, the first base station sends the obtaining request to a second base station, where a local cache of the second base station stores the data resource.

Specifically, after receiving the obtaining request, the first base station firstly determines whether its own local cache stores the data resource corresponding to the description information carried in the obtaining request, if not, based on P2P technology, sends the obtaining request to the second base station whose local cache stores the aforementioned data resource, or its own local cache only stores part of the data resource, then the first base station sends the obtaining request to the second base station, to obtain other part of the data resource, where the first base station, for example, may store a record of obtaining data resources from other base stations, and the record includes description information of the data resources and identifiers of target base stations from which the resources are obtained.

Step 203, The first base station receives the data resource which corresponds to the description information and is sent by the second base station, and sends the data resource to the mobile terminal.

Specifically, the data resources may be transmitted between the first base station and the second base station based on the P2P transmission mechanism. The second base station sends the data resource corresponding to the description information in its local cache to the first base station, the first base station receives the data resource, and sends it to the mobile terminal which initiates the request. The first base station may store the data resource in its local cache, and when other base station initiates an obtaining request for the data resource, the first base station sends it to the other base station.

As shown in FIG. 3, e.g., mobile terminal 1 initiates the obtaining request, and the base station where mobile terminal 1 is located is taken as the first base station to receive the obtaining request. If there is no data resource corresponding to the description information in the obtaining request in the first base station's local cache, the first base station sends the obtaining request to the second base station where mobile terminal 3 is located. The second base station transmits the data resource to the first base station based on P2P transmission mechanism, and the first base station transmits the data resource to mobile terminal 1.

In the method, device and system for obtaining data resources of a mobile network in the embodiments of the present invention, the first mobile station receives the obtaining request which includes description information of the data resource requested to obtain and is sent by a mobile terminal, and if between base stations determines that a local cache does not store the data resource corresponding to the description information, the first mobile station sends the obtaining request to the second base station whose local cache stores the data resource, and the first base station receives the data resource which corresponds to the description information and is sent by the second base station, and sends it to the mobile terminal, thus it is realized that data resources are obtained between base stations based on P2P technology, which is able to prevent the problem that a lot of network uplink bandwidth is occupied after P2P transmission mechanism is introduced into the mobile network.

FIG. 4 is a signaling flow chart of a second embodiment of the method for obtaining data resources according to the present invention, and FIG. 5 is a network structural schematic diagram of the second embodiment of the method for obtaining data resources according to the present invention. Based on the embodiment shown in FIG. 2, further, in the present embodiment, the sending the obtaining request to the second base station can use the following specific manners to implement:
The first base station sends the obtaining request directly to the second base station, according to a record of obtaining the data resource from the second base station which is saved previously; or, the first base station sends the obtaining request to a server, receives an identification information which is returned by the server and is an identification information of a base station which stores the data resource, and sends the obtaining request to the second base station according to the identification information.

Specifically, as shown in FIG. 4, after the first base station receives the obtaining request sent by the mobile terminal, if there is no corresponding data resource in its local cache, and the first base station stores the record that it has obtained the data resource from the second base station, then sends the obtaining request to the second base station directly (as step 2 shown in FIG. 4), and if no record is stored, as 2a, 2b shown in FIG. 4, then sends the obtaining request to a server (as shown in FIG. 5) connected with the base station, and the first base station receives the identification information which is returned by the server and is the identification information of the base station which stores the data resource. Since the same data resource can be stored in a plurality of base stations' local caches, the server can, according to busy situation of each base station, select a base station which is relatively idle, and send the identification information of the base station to the first base station, and the server can also send the busy situation of each base station which is included in the identification information to the first base station, and the first base station obtains the data resource from a base station which is relatively idle. According to the identification information, the first base station sends the obtaining request to second base station which is relatively idle (as step 2 shown in FIG. 4), and the subsequent steps are referred to those in the embodiment according to FIG. 2, which will not be repeated hereby.

In the present embodiment, the first base station sends the obtaining request to the second base station directly according to the record of obtaining the data resource from the second base station which is saved previously; or, the first base station sends the obtaining request to the server, receives the identification information which is returned by the server and is the identification information of a base station which stores the data resource, and sends the obtaining request to the second base station according to the identification information, so that the first base station can acquire the identification information of the base station which stores the data resource when initiating the obtaining request of the data resource, and sends the obtaining request to the base station.

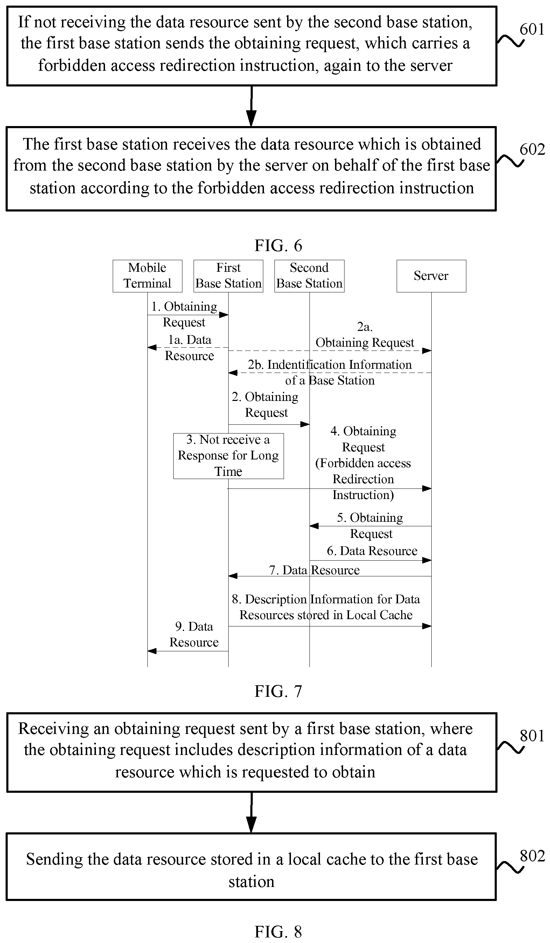

FIG. 6 is a flow chart of a third embodiment of the method for obtaining data resources according to the present invention, and FIG. 7 is a signaling flow chart of the third embodiment of the method for obtaining data resources according to the present invention. As shown in FIG. 6, based on the second method embodiment, further, the method in the present embodiment can include:
Step 601, If not receiving the data resource sent by the second base station, the first base station sends the obtaining request, which carries a forbidden access redirection instruction, again to the server.

Specifically, as shown in FIG. 7, after sending the obtaining request of the data resource to the second base station, the first base station does not receive the data resource sent by the second base station, which means the first base station can not communicate with the second base station at that time, then the first base station sends the obtaining request, which carries the forbidden access redirection instruction, to the server, to notify the server of forbidding redirection, namely to forbid the server resend the identification information of the base station which stores the data resource.

Step 602, the first base station receives the data resource which is obtained from the second base station by the server on behalf of the first base station according to the forbidden access redirection instruction.

Specifically, as shown in FIG. 7, the server, on behalf of the first base station, obtains the data resource from the second base station according to the forbidden access redirection instruction, and sends the data resource to the first base station.

Further, in the present embodiment, the methods further includes:
the first base station reports to the server description information of data resource stored in its own local cache.

Specifically, as shown in FIG. 7, the first base station may report the description information of the data resources stored in its own local cache periodically, or the first base station may report the description information of the data resources stored in its own local cache based on event triggering, e.g., the first base station may report when obtaining new data resources from other base station such as the second base station, or when deleting some data resources which are not used for a long time from its own local cache. The description information, for instances, is a uniform resource locator (Uniform Resource Locator, briefed as URL), or a name identifier and etc.

Further, in the present embodiment, the method further includes:
if determining that its own local cache stores the data resource corresponding to the description information, the first base station sends directly the data resources to the mobile terminal.

Specifically, if the first base station's local cache stores the data resource corresponding to the description information, then the first base station directly sends the data resource to the mobile terminal, without initiating the request to other base station or the server.

In the present embodiment, if not receiving data resource sent by the second base station, the first base station sends the obtaining request, which carries the forbidden access redirection instruction, to the server again, and receives the data resource, which is obtained from the second base station by the server on behalf of the first base station, according to the forbidden access redirection instruction, thus preventing that the server performs redirection to reduce the obtaining efficiency of data resources. In addition, the first base station reports to the server the description information of the data resources stored in its own local cache periodically or based on event triggering, thus the server is able to know which data resources are stored in the local caches of the base stations connected with the server, for convenience that the sever can return the identification information of the base station which stores the data resource obtained, when the base station initiates the obtaining request of data resource to the server.

FIG. 8 is a flow chart of a fourth embodiment of the method for obtaining data resources according to the present invention. The execution entity of the present embodiment is a base station, which can be implemented through software and/or hardware. As shown in FIG. 8, the method of the present embodiment can include:
Step 801, receiving an obtaining request sent by a first base station, where the obtaining request includes description information of a data resource which is requested to obtain.
Step 802, sending the data resource stored in a local cache to the first base station.

The method of the present embodiment has the similar implementation principle and technical effects of the technical solutions with the method embodiment according to FIG. 2, which will not be repeated hereby.

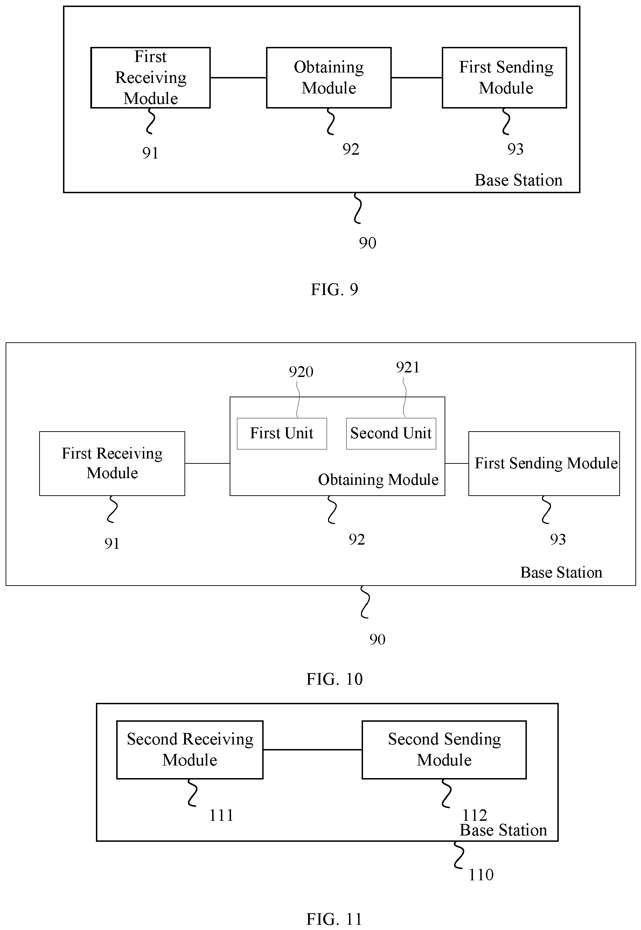

FIG. 9 is a structural schematic diagram of a first embodiment of a base station according to the present invention. As shown in FIG. 9, the base station 90 in the present embodiment can include: a first receiving module 91, an obtaining module 92 and a first sending module 93, where the first receiving module 91 is configured to receive an obtaining request sent by a mobile terminal, where the obtaining request includes description information of a data resource requested to obtain; the obtaining module 92 is configured to, if determining that its own local cache does not store the data resource corresponding to the description information, send the obtaining request to a second base station, where the second base station's local cache stores the data resource; and the first sending module 93 is configured to receive the data resource corresponding to the description information and sent by the second base station, and send the data resource to the mobile terminal.

Specifically, the mobile terminal initiates the obtaining request, the first receiving module 91 of the base station 90 where the mobile terminal is located receives the obtaining request, if determining that there is no data resource corresponding to the description information of the obtaining request in the local cache of the base station 90, the obtaining module 92 sends the obtaining request to the second base station, and based on P2P technology, the second base station sends the data resource to the base station. The first sending module 93 of the base station 90 receives the data resource and sends the data resource to the mobile terminal.

The base station in the present embodiment may be used to execute the technical solutions of the method embodiment according to FIG. 2, and the implementation principle and the technical effects thereof are similar, which will not be repeated hereby.

FIG. 10 is a structural schematic diagram of a second embodiment of the base station according to the present invention. As shown in FIG. 10, the base station in the present embodiment is based on the diagram of the base station according to FIG .9, and further, the obtaining module 92 may include: a first unit 920 and/or a second unit 921, where the first unit 920 is configured to send the obtaining request directly to the second base station, according to a record of obtaining the data resource from the second base station which is saved previously; and the second unit 921 is configured to send the obtaining request to a server, receive an identification information which is returned by the server and is an identification information of a base station which stores the data resource, and send the obtaining request to the second base station according to the identification information.

Specifically, after the first receiving module 91 of the base station 90 receives the obtaining request sent by the mobile terminal and determines that there is no corresponding data resource in the base station 90's local cache, if the first unit 920 of the obtaining module 92 of the base station 90 stores the record of obtaining the data resource from the second base station, then the first unit 920 sends the obtaining request to the second base station directly, and if the first unit 920 does not store the record, the second unit 921 of the obtaining module 92 sends the obtaining request to the server connected with base station 90, and the first sending module 930 of the base station 90 receives an identification information which is returned by the server and is an identification information of a base station which stores the data resource, and the first unit 920 of the obtaining module 92 of the base station 90 sends the obtaining request to the second base station according to the identification information.

The base station in the present embodiment may be used to execute the technical solutions of the second embodiment of the method for obtaining data resources of the present invention, and the implementation principle and the technical effects thereof are similar, which will not be repeated hereby.

In a third embodiment of the base station of the present invention, based on the second embodiment of the base station of the present invention, further, the second unit 921 of the present embodiment is further configured to:
if the first sending module 93 does not receive the data resource sent by the second base station, the first sending module 93 sends the obtaining request, which carries a forbidden access redirection instruction, again to the server; correspondingly,
the first sending module 93, is further configured to receive the data resource, which is obtained from the second base station by the server on behalf of the first base station, according to the forbidden access redirection instruction.

Further, the first sending module 93 is further configured to: report to the server description information of data resource stored in its own local cache.

Specifically, after the first unit 920 of the obtaining module 92 of the base station 90 sends the obtaining request of the data resource to the second base station, the first sending module 93 of the base station 90 does not receive the data resource sent by the second base station for a long time, which means base station 90 can not communicate with the second base station at that time, then the second unit 921 of the obtaining module 92 of base station 90 sends the obtaining request, which carries the forbidden access redirection instruction, to the server, to notify the server of forbidding redirection, namely to forbid the server resend the identification information of the base station which stores the data resource, and the server on behalf of base station 90 obtains the data resource from the second base station, and sends the data resource to base station 90, and the first sending module 93 of base station 90 receives the data resource.

Further, the first sending module 93 of base station 90 may report the description information of the data resources stored in the local cache periodically, or report the description information of the data resources stored in the local cache based on event triggering, which will not be limited by the present invention herein.

The base station in the present embodiment may be used to execute the technical solutions of the method embodiment according to FIG. 6, and the implementation principle and the technical effects thereof are similar, which will not be repeated hereby.

FIG. 11 is a schematic diagram of a fourth embodiment of the base station according to the present invention. As shown in FIG. 11, base station 110 of the present embodiment may include: a second receiving module 111 and a second sending module 112, where the second receiving module 111 is configured to receive an obtaining request sent by a first base station, where the obtaining request includes description information of a data resource which is requested to obtain; and the second sending module 112 is configured to send the data resource stored in its own local cache to the first base station.

Specifically, the second receiving module 111 of base station 110 receives the obtaining request sent by the first base station, and the second sending module 112 sends the data resource stored in its own local cache to the first base station.

The base station in the present embodiment may be used to execute the technical solutions of the method embodiment according to FIG. 8, and the implementation principle and the technical effects thereof are similar, which will not be repeated hereby.

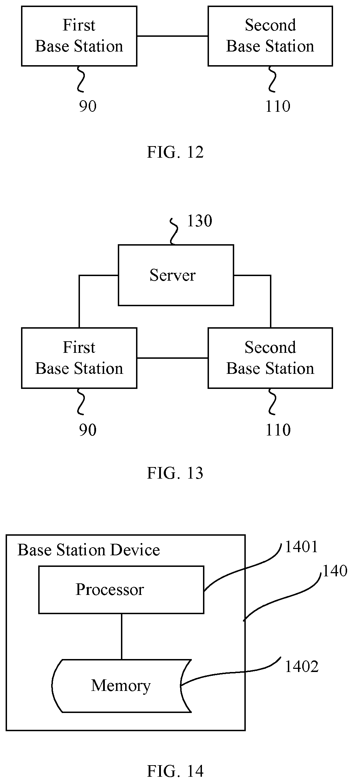

FIG. 12 is a structural schematic diagram of a first embodiment of a network system according to the present invention. As shown in FIG. 12, the network system of the present embodiment includes: at least one first base station 90 and at least one base station 110, where the first base station 90 may employ the structure of the base station according to any one of the first to the third embodiment of the base station, correspondingly, may execute the technical solutions according to any one of the first to the third embodiments of the method. The second base station 110 may employ the structure of the base station according to the fourth embodiment of the base station, correspondingly, may execute the technical solutions according to the fourth embodiment of the method. The implementation principle and the technical effects thereof are similar, which will not be repeated hereby.

FIG. 13 is a structural schematic diagram of a second embodiment of the network system according to the present invention. As shown in FIG. 13, based on the embodiment according to FIG. 12, further, the network system of the present embodiment also includes: a server 130, which stores description information of data resources stored in each base station's local cache.

The present embodiment has the similar implementation principle and technical effects with that of the network system embodiment according to FIG. 12, which will not be repeated hereby.

FIG. 14 is a schematic diagram of a first embodiment of a base station device according to the present invention. As shown in FIG. 14, the base station device 140 provided by the present embodiment includes: a processor 1401 and a memory 1402, where the memory 1402 stores execution instructions, and when the base station device 140 runs, the processor 1401 communicates with the memory 1402, and the processor 1401 executes the execution instructions in order that the base station device 1400 executes the method of the technical solutions according to any one of the method embodiments of the present invention. The implementation principle and the technical effects thereof are similar, which will not be repeated hereby.

In the several embodiments provided by the present application, it should be understood that, the apparatus and method disclosed, may be implemented in other ways. For example, the above described apparatus embodiments are merely schematic, e.g., the division of units is merely a division according to logic functions, and in an actual implementation, there may be other ways of division, for example, multiple units or components may be combined or may be integrated into another system, or some features may be ignored or may not be executed. In another point, mutual coupling, direct coupling or communication connection as shown or as discussed, may be indirect coupling or communication connection through some interfaces, apparatus or units, which may be electrical, mechanical or in other forms.

Units described as separate components may be or may not be separated physically, a component shown as a unit may be or may not be a physical unit, namely, may be located in one place, or distributed on multiple network units. Part of or entire of the units may be selected according to actual needs to achieve an objective of solutions in the present embodiments.

In addition, each functional unit in embodiments of the present invention may be integrated into one processing unit, or each unit may also exist independent physically, or two or more units may also be integrated into one unit. The above mentioned integrated unit may be either implemented in form of hardware, or implemented in form of hardware plus software functional unit.

The aforementioned integrated unit which is implemented in form of software functional unit may store in a computer readable storage medium. The aforementioned software functional units are stored in a storage medium, including several instructions in order to enable a computer device (which may be a personal computer, a server, or a network device and the like) or a processor (processor) to execute part of the steps of the methods in each embodiment of the present application. And the aforementioned storage medium may include: a U disk, a mobile disk, a read only memory (ROM, Read-Only Memory), a random access memory (RAM, Random Access Memory), a disk or an optical disk and other kinds of media which can store program codes.

Skilled persons in the art may clearly understand that, for convenience and clarity, it is illustrated only according to a division of the above mentioned functional modules, in practice, it may distribute the above functions to different functional modules to complete according to needs, that is dividing an interior structure of an apparatus to different functional modules, to complete part of or entire of the above mentioned functions. A specific work process of the above described apparatus may be referred to the corresponding process in the aforementioned method embodiments, which will not be repeated hereby.

Finally, it should be noted that: the foregoing embodiments are merely intended for describing the technical solutions of the present invention, other than limiting the present invention; although the present invention is described in detail with reference to the foregoing embodiments, persons of ordinary skill in the art should understand that they may still make modifications to the technical solutions described in the foregoing embodiments or make equivalent substitutions to part or all of technical features thereof, which will not make the essence of the corresponding technical solution depart from scope of the technical solutions of embodiments of the present invention.

## Claims

1. A method for obtaining data resources, **characterizing by** comprising:
receiving (201), by a first base station, an obtaining request sent by a mobile terminal, wherein the obtaining request includes description information of a data resource requested to obtain;
if the first base station determines that a local cache does not store the data resource corresponding to the description information, sending (202), by the first base station, the obtaining request to a second base station based on peer to peer, P2P, technology, wherein a local cache of the second base station stores the data resource; and
receiving (203), by the first base station, the data resource which corresponds to the description information and is sent by the second base station based on a P2P transmission mechanism, and sending the data resource to the mobile terminal.

2. The method according to claim 1, wherein the sending the obtaining request to the second base station comprises:
sending, by the first base station, the obtaining request directly to the second base station, according to a record of obtaining the data resource from the second base station which is saved previously; or,
sending, by the first base station, the obtaining request to a server, receiving an identification information which is returned by the server and is an identification information of a base station which stores the data resource, and sending the obtaining request to the second base station according to the identification information.

3. The method according to claim 2, further comprising:
if the first base station does not receive the data resource sent by the second base station, sending, by the first base station, the obtaining request, which carries a forbidden access redirection instruction, again to the server; and
receiving, by the first base station, the data resource, which is obtained from the second base station by the server on behalf of the first base station according to the forbidden access redirection instruction.

4. The method according to any one of claims 2 to 3, further comprising:
reporting, by the first base station, to the server description information of data resources stored in the local cache.

5. The method according to any one of claims 1 to 3, further comprising:
if the first base station determines that the local cache stores the data resource corresponding to the description information, sending, by the first base station, directly the data resource to the mobile terminal.

6. A method for providing data resources, **characterizing by** comprising:
receiving (801), an obtaining request sent by a first base station based on peer to peer, P2P, technology, wherein the obtaining request comprises description information of a data resource which is requested to obtain; and
sending (802) the data resource stored in a local cache to the first base station based on a P2P transmission mechanism.

7. A base station, **characterizing by** comprising:
a first receiving module (91), configured to receive an obtaining request sent by a mobile terminal, wherein the obtaining request comprises description information of a data resource requested to obtain;
an obtaining module (92), configured to, if determining that a local cache does not store the data resource corresponding to the description information, send the obtaining request to a second base station based on peer to peer, P2P, technology, wherein a local cache of the second base station stores the data resource; and
a first sending module (93), configured to receive the data resource which corresponds to the description information and is sent by the second base station based on a P2P transmission mechanism, and send the data resource to the mobile terminal.

8. The base station according to claim 7, wherein the obtaining module (92) comprises:
a first unit (920), configured to send the obtaining request directly to the second base station, according to a record of obtaining the data resource from the second base station which is saved previously; and/or,
a second unit (921), configured to send the obtaining request to a server, receive an identification information which is returned by the server and is an identification information of a base station which stores the data resource, and send the obtaining request to the second base station according to the identification information.

9. The base station according to claim 8, wherein the second unit is further configured to:
if the first sending module (93) does not receive the data resource sent by the second base station, send the obtaining request, which carries a forbidden access redirection instruction, again to the server; correspondingly,
the first sending module (93), is further configured to receive the data resource, which is obtained from the second base station by the server on behalf of the first base station according to the forbidden access redirection instruction.

10. The base station according to any one of claims 8 to 9, wherein the first sending module (93) is further configured to: report to the server description information of data resources stored in the local cache thereof.

11. A base station, **characterizing by** comprising:
a second receiving module (111), configured to receive an obtaining request sent by a first base station based on peer to peer, P2P, technology, wherein the obtaining request comprises description information of a data resource which is requested to obtain; and
a second sending module (112), configured to send the data resource stored in a local cache to the first base station based on a P2P transmission mechanism.

12. A network system, **characterizing by** comprising at least one base station (90) according to any one of claims 7-10, and at least one base station (110) according to claim 11.

13. The network system according to claim 12, further comprising:
a server (130), which stores description information of data resources stored in a local cache of each base station.

## Patentansprüche

1. Verfahren zum Erhalten von Datenressourcen, **dadurch gekennzeichnet, dass** das Verfahren Folgendes aufweist:
Empfangen (201) einer Erhalteanfrage, die von einem mobilen Endgerät gesendet wird, durch eine erste Basisstation, wobei die Erhalteanfrage Beschreibungsinformationen einer Datenressource, deren Erhalt angefragt wurde, aufweist;
Senden (202), wenn die erste Basisstation bestimmt, dass ein lokaler Cache die Datenressource, die den Beschreibungsinformationen entspricht, nicht speichert, der Erhalteanfrage an eine zweite Basisstation durch die erste Basisstation basierend auf Peer-to-Peer(P2P)-Technologie, wobei ein lokaler Cache der zweiten Basisstation die Datenressource speichert; und
Empfangen (203) der Datenressource, die den Beschreibungsinformationen entspricht und von der zweiten Basisstation über einen P2P-Übertragungsmechanismus gesendet wird, durch die erste Basisstation, und Senden der Datenressource an das mobile Endgerät.

2. Verfahren nach Anspruch 1, wobei das Senden der Erhalteanfrage an die zweite Basisstation Folgendes aufweist:
Senden der Erhalteanfrage von der ersten Basisstation direkt an die zweite Basisstation gemäß einer Aufzeichnung des Erhaltens der Datenressource durch die zweite Basisstation, die zuvor gespeichert wurde; oder
Senden der Erhalteanfrage von der ersten Basisstation an einen Server, Empfangen einer Identifizierungsinformation, die von dem Server zurückgesendet wird und eine Identifizierungsinformation einer Basisstation ist, die die Datenressource speichert, und Senden der Erhalteanfrage an die zweite Basisstation gemäß der Identifizierungsinformation.

3. Verfahren nach Anspruch 2, das ferner Folgendes aufweist:
Senden der Erhalteanfrage, die einen verbotenen Zugriffsumleitungsbefehl trägt, von der ersten Basisstation erneut an den Server, falls die erste Basisstation die Datenressource, die von der zweiten Basisstation gesendet wird, nicht empfängt; und
Empfangen der Datenressource, die von der zweiten Basisstation durch den Server im Auftrag der ersten Basisstation gemäß dem verbotenen Zugriffsumleitungsbefehl erhalten wird, durch die erste Basisstation.

4. Verfahren nach einem der Ansprüche 2 bis 3, das ferner Folgendes aufweist: Berichten von Beschreibungsinformationen über Datenressourcen, die in dem lokalen Cache gespeichert sind, an den Server durch die erste Basisstation.

5. Verfahren nach einem der Ansprüche 1 bis 3, das ferner Folgendes aufweist: direktes Senden der Datenressource an das mobile Endgerät durch die erste Basisstation, falls die erste Basisstation bestimmt, dass der lokale Cache die Datenressource, die den Beschreibungsinformationen entspricht, speichert.

6. Verfahren zum Bereitstellen von Datenressourcen, **dadurch gekennzeichnet, dass** das Verfahren Folgendes aufweist:
Empfangen (801) einer Erhalteanfrage, die von einer ersten Basisstation basierend auf Peer-to-Peer(P2P)-Technologie gesendet wird, wobei die Erhalteanfrage Beschreibungsinformationen einer Datenressource, deren Erhalt angefragt wird, aufweist; und
Senden (802) der Datenressource, die in einem lokalen Cache gespeichert wird, an die erste Basisstation basierend auf einem P2P-Übertragungsmechanismus.

7. Basisstation, **dadurch gekennzeichnet, dass** diese Folgendes aufweist:
ein erstes Empfangsmodul (91), das dazu ausgelegt ist, eine Erhalteanfrage, die von einem mobilen Endgerät gesendet wird, zu empfangen, wobei die Erhalteanfrage Beschreibungsinformationen einer Datenressource, deren Erhalt angefragt wurde, aufweist;
ein Erhaltemodul (92), das dazu ausgelegt ist, wenn bestimmt wird, dass ein lokaler Cache die Datenressource, die den Beschreibungsinformationen entspricht, nicht speichert, die Erhalteanfrage an eine zweite Basisstation basierend auf Peer-to-Peer(P2P)-Technologie zu senden, wobei ein lokaler Cache der zweiten Basisstation die Datenressource speichert; und
ein erstes Sendemodul (93), das dazu ausgelegt ist, die Datenressource, die den Beschreibungsinformationen entspricht und von der zweiten Basisstation über einen P2P-Übertragungsmechanismus gesendet wird, zu empfangen und die Datenressource an das mobile Endgerät zu senden.

8. Basisstation nach Anspruch 7, wobei das Erhaltemodul (92) Folgendes aufweist:
eine erste Einheit (920), die dazu ausgelegt ist, die Erhalteanfrage direkt an die zweite Basisstation gemäß einer Aufzeichnung des Erhaltens der Datenressource von der zweiten Basisstation, die zuvor gespeichert wurde, zu senden; und/oder
eine zweite Einheit (921), die dazu ausgelegt ist, die Erhalteanfrage an einen Server zu senden, eine Identifizierungsinformation, die von dem Server zurückgesendet wird und eine Identifizierungsinformation einer Basisstation ist, die die Datenressource speichert, zu empfangen und die Erhalteanfrage an die zweite Basisstation gemäß der Identifizierungsinformation zu senden.

9. Basisstation nach Anspruch 8, wobei die zweite Einheit ferner zu Folgendem ausgelegt ist:
Senden der Erhalteanfrage, die einen verbotenen Zugriffsumleitungsbefehl trägt, erneut an den Server, falls das erste Sendemodul (93) die Datenressource, die von der zweiten Basisstation gesendet wird, nicht empfängt; entsprechend
ist das erste Sendemodul (93) ferner dazu ausgelegt, die Datenressource, die von der zweiten Basisstation durch den Server im Auftrag der ersten Basisstation gemäß dem verbotenen Zugriffsumleitungsbefehl erhalten wird, zu empfangen.

10. Basisstation nach einem der Ansprüche 8 bis 9,
wobei das erste Sendemodul (93) ferner dazu ausgelegt ist, Beschreibungsinformationen über Datenressourcen, die in dem lokalen Cache davon gespeichert sind, an den Server zu berichten.

11. Basisstation, **dadurch gekennzeichnet, dass** diese Folgendes aufweist:
ein zweites Empfangsmodul (111), das dazu ausgelegt ist, eine Erhalteanfrage, die von einer ersten Basisstation basierend auf Peer-to-Peer(P2P)-Technologie gesendet wird, zu empfangen, wobei die Erhalteanfrage Beschreibungsinformationen einer Datenressource, deren Erhalt angefragt wird, aufweist; und
ein zweites Sendemodul (112), das dazu ausgelegt ist, die Datenressource, die in einem lokalen Cache gespeichert wird, an die erste Basisstation basierend auf einem P2P-Übertragungsmechanismus zu senden.

12. Netzwerksystem, das **dadurch gekennzeichnet ist, dass** es mindestens eine Basisstation (90) gemäß einem der Ansprüche 7 bis 10 und mindestens eine Basisstation (110) gemäß Anspruch 11 aufweist.

13. Netzwerksystem nach Anspruch 12, das ferner Folgendes aufweist:
einen Server (130), der Beschreibungsinformationen über Datenressourcen, die in einem lokalen Cache jeder Basisstation gespeichert sind, speichert.

## Revendications

1. Procédé d'obtention de ressources de données, le procédé étant **caractérisé en ce qu'**il comprend les étapes suivantes :
réception (201), par une première station de base, d'une demande d'obtention envoyée par un terminal mobile, la demande d'obtention comportant des informations de description relatives à une ressource de données dont l'obtention est demandée ;
si la première station de base détermine qu'un cache local ne stocke pas la ressource de données correspondant aux informations de description, envoi (202), par la première station de base, de la demande d'obtention à une deuxième station de base sur la base de la technologie pair à pair, notée P2P, un cache local de la deuxième station de base stockant la ressource de données ; et
réception (203), par la première station de base, de la ressource de données correspondant aux informations de description et envoyée par la deuxième station de base sur la base d'un mécanisme de transmission P2P, et envoi de la ressource de données au terminal mobile.

2. Procédé selon la revendication 1, dans lequel l'étape d'envoi de la demande d'obtention à la deuxième station de base comprend les étapes suivantes :
envoi, par la première station de base, de la demande d'obtention directement à la deuxième station de base, selon un enregistrement d'obtention de la ressource de données depuis la deuxième station de base sauvegardé précédemment ; ou,
envoi, par la première station de base, de la demande d'obtention à un serveur, réception d'une information d'identification renvoyée par le serveur et constituant une information d'identification relative à une station de base qui stocke la ressource de données, et envoi de la demande d'obtention à la deuxième station de base selon l'information d'identification.

3. Procédé selon la revendication 2, comprenant en outre les étapes suivantes :
si la première station de base ne reçoit pas la ressource de données envoyée par la deuxième station de base, nouvel envoi, par la première station de base, de la demande d'obtention, véhiculant une instruction de réacheminement d'accès interdit, au serveur ; et
réception, par la première station de base, de la ressource de données, obtenue depuis la deuxième station de base par le serveur pour le compte de la première station de base selon l'instruction de réacheminement d'accès interdit.

4. Procédé selon l'une quelconque des revendications 2 à 3, comprenant en outre l'étape suivante :
notification, par la première station de base, au serveur, d'informations de description relatives à des ressources de données stockées dans le cache local.

5. Procédé selon l'une quelconque des revendications 1 à 3, comprenant en outre l'étape suivante :
si la première station de base détermine que le cache local stocke la ressource de données correspondant aux informations de description, envoi, par la première station de base, de la ressource de données directement au terminal mobile.

6. Procédé de fourniture de ressources de données, le procédé étant **caractérisé en ce qu'**il comprend les étapes suivantes :
réception (801) d'une demande d'obtention envoyée par une première station de base sur la base de la technologie pair à pair, notée P2P, la demande d'obtention comprenant des informations de description relatives à une ressource de données dont l'obtention est demandée ; et
envoi (802) de la ressource de données stockée dans un cache local à la première station de base sur la base d'un mécanisme de transmission P2P.

7. Station de base, la station de base étant **caractérisée en ce qu'**elle comprend :
un premier module de réception (91), configuré pour recevoir une demande d'obtention envoyée par un terminal mobile, la demande d'obtention comprenant des informations de description relatives à une ressource de données dont l'obtention est demandée ;
un module d'obtention (92), configuré pour, s'il détermine qu'un cache local ne stocke pas la ressource de données correspondant aux informations de description, envoyer la demande d'obtention à une deuxième station de base sur la base de la technologie pair à pair, notée P2P, un cache local de la deuxième station de base stockant la ressource de données ; et
un premier module d'envoi (93), configuré pour recevoir la ressource de données correspondant aux informations de description et envoyée par la deuxième station de base sur la base d'un mécanisme de transmission P2P, et envoyer la ressource de données au terminal mobile.

8. Station de base selon la revendication 7, dans laquelle le module d'obtention (92) comprend :
une première unité (920), configurée pour envoyer la demande d'obtention directement à la deuxième station de base, selon un enregistrement d'obtention de la ressource de données depuis la deuxième station de base sauvegardé précédemment ; et/ou,
une deuxième unité (921), configurée pour envoyer la demande d'obtention à un serveur, recevoir une information d'identification renvoyée par le serveur et constituant une information d'identification relative à une station de base qui stocke la ressource de données, et envoyer la demande d'obtention à la deuxième station de base selon l'information d'identification.

9. Station de base selon la revendication 8, dans laquelle la deuxième unité est configurée en outre pour :
si le premier module d'envoi (93) ne reçoit pas la ressource de données envoyée par la deuxième station de base, envoyer une nouvelle fois la demande d'obtention, véhiculant une instruction de réacheminement d'accès interdit, au serveur ; de manière correspondante,
le premier module d'envoi (93) est configuré en outre pour recevoir la ressource de données, obtenue depuis la deuxième station de base par le serveur pour le compte de la première station de base selon l'instruction de réacheminement d'accès interdit.

10. Station de base selon l'une quelconque des revendications 8 à 9, dans laquelle le premier module d'envoi (93) est configuré en outre pour : notifier le serveur d'informations de description relatives à des ressources de données stockées dans son cache local.

11. Station de base, la station de base étant **caractérisée en ce qu'**elle comprend :
un deuxième module de réception (111), configuré pour recevoir une demande d'obtention envoyée par une première station de base sur la base de la technologie pair à pair, notée P2P, la demande d'obtention comprenant des informations de description relatives à une ressource de données dont l'obtention est demandée ; et
un deuxième module d'envoi (112), configuré pour envoyer la ressource de données stockée dans un cache local à la première station de base sur la base d'un mécanisme de transmission P2P.

12. Système de réseau, le système de réseau étant **caractérisé en ce qu'**il comprend au moins une station de base (90) selon l'une quelconque des revendications 7 à 10, et au moins une station de base (110) selon la revendication 11.

13. Système de réseau selon la revendication 12, comprenant en outre :
un serveur (130), qui stocke des informations de description relatives à des ressources de données stockées dans un cache local de chaque station de base.
